# NEUE EUROPÄISCHE PATENTSCHRIFT

(11) **EP 1 729 195 B2**
(45) Veröffentlichungstag und Bekanntmachung des Hinweises auf die Entscheidung über den Einspruch: **23.01.2013**
(45) Hinweis auf die Patenterteilung: 25.11.2009
(21) Anmeldenummer: 06011055.8
(22) Anmeldetag: 30.05.2006
(51) Int. Cl.: G05B 23/02, G05D 23/19, F24D 19/10, G05D 23/02

(54) **Wärmetauscherventil-Steueraufsatz, insbesondere Heizkörperventil-Thermostataufsatz, mit thermoelektrischem Generator**
Thermostat (in particular for radiator for room heating) comprising thermoelectric generator
Thermostat, en particulier pour radiateur pour chauffage domestique, comprenant un générateur thermoélectrique

(30) Priorität: 03.06.2005 DE 102005025501
(43) Veröffentlichungstag der Anmeldung: 06.12.2006
(73) Patentinhaber: Danfoss A/S, 6430 Nordborg (DK)
(72) Erfinder: Frederiksen, Bjarne, 8632 Lemming (DK); Gregersen, Niels, 8464 Galten (DK); Larsen, Arne Børge, 8660 Skanderborg (DK); Manscher, Martin, 2500 Valby (DK)
(74) Vertreter: Knoblauch, Andreas

(56) Entgegenhaltungen:
- EP-A1- 0 717 332
- DE-A1- 3 127 184
- DE-A1- 3 416 096
- DE-A1- 19 732 687
- DE-U1- 9 312 588
- DE-U1- 20 107 112

## Beschreibung

Die Erfindung betrifft einen Wärmetauscherventil-Steueraufsatz, insbesondere einen Heizkörperventil-Thermostataufsatz, mit den Merkmalen des Oberbegriffs des Anspruchs 1.

Ein derartiger Steueraufsatz ist aus EP 0 717 332 A1 bekannt.

Die Erfindung wird im folgenden anhand eines Heizkörperventil-Thermostataufsatzes als Beispiel für einen Steueraufsatz beschrieben. Sie ist jedoch nicht nur bei Heizkörpern anwendbar, sondern im Prinzip auch bei anderen Wärmetauschern, die zur Raumklimatisierung verwendet werden können, beispielsweise Kühldecken oder ähnlichem.

Die Betätigungseinrichtung ist in einem derartigen Steueraufsatz als Thermostatelement ausgebildet, dessen Volumen sich mit der Temperatur ändert. Wenn die Raumtemperatur ansteigt, dann dehnt sich das Thermostatelement aus und verschiebt das Ventilelement in Richtung auf den Ventilsitz, so daß der Durchfluß von Heizflüssigkeit gedrosselt wird. Umgekehrt wird bei einer Verminderung der Raumtemperatur das Ventilelement vom Ventilsitz abgehoben, so daß eine größere Menge an Heizflüssigkeit durch den Heizkörper fließen kann.

Zur Sollwertverstellung kann beispielsweise die Position des Thermostatelements verändert werden oder man kann die Länge eines Betätigungsstranges zwischen dem Thermostatelement und dem Stößel, der letztendlich das Ventilelement betätigt, verändern. Hierzu ist dann beispielsweise ein elektrischer Motor vorgesehen, der hier den elektrischen Verbraucher bildet.

Der Motor und seine Steuerung benötigen allerdings elektrische Energie. Diese kann durch Leitungen zugeführt werden, die den Aufsatz mit einer externen Energiequelle verbinden. Eine derartige Lösung wird allerdings nur ungern verwendet, weil die Leitungen einen zusätzlichen Installationsaufwand bedeuten.

Die Verwendung von einer oder mehrerer Batterien läßt zwar diesen zusätzlichen Installationsaufwand entfallen. Man benötigt allerdings einen teilweise erheblichen Bauraum, um die Batterien unterzubringen.

Ein Steueraufsatz der eingangs genannten Art ist aus DE 93 12 588 U1 bekannt. Hier ist zusätzlich zu einem Akkumulator, d.h. einer wiederaufladbaren Batterie, ein Paneel mit Solarzellen vorgesehen. Die Solarzellen stellen im Grunde die für den Betrieb der Verstelleinrichtung notwendige elektrische Energie zur Verfügung. Allerdings wäre ein Betrieb der Verstelleinrichtung nur bei Tageslicht möglich. Der Akkumulator sorgt dafür, daß auch in Nachtzeiten eine Verstellung vorgenommen werden kann. Allerdings ist auch hier wieder ein nicht unerheblicher Bauraum erforderlich, um den Akkumulator unterzubringen.

Aus DE 34 16 096 A1 ist eine Vorrichtung zur elektrisch leistungsarm steuerbaren Einzelabschaltung von Heizkörpern bekannt, wobei ein Ventilelement mithilfe eines Thermostatelements, das als Betätigungseinrichtung dient, betätigt wird. Das Thermostatelement kann über einen Wärmetauscher einer erhöhten Temperatur ausgesetzt werden. Dies führt zu einer entsprechenden Betätigung des Ventilelements und damit zu einer Drosselung des Heizwasserzuflusses. Die Wärmezufuhr zum Wärmetauscher wird mithilfe eines bistabilen Schaltventils gesteuert. Die Schaltventile stellen dabei einen elektrischen Verbraucher dar. Dieser kann über Batterien mit elektrischer Energie versorgt werden.

Der Erfindung liegt die Aufgabe zugrunde, die äußeren Abmessungen eines Steueraufsatzes möglichst klein zu halten.

Diese Aufgabe wird bei einem Wärmetauscherventil-Steueraufsatz der eingangs genannten Art mit den Merkmalen des kennzeichnenden Teils des Anspruchs 1 gelöst.

Ein thermoelektrischer Generator arbeitet beispielsweise nach dem sogenannten "Seebeck-Effekt". Er enthält zwei unterschiedliche Metalle oder Halbleiter, wobei ihre Übergänge auf unterschiedlichen Temperaturen gehalten wird. Zwischen den unterschiedlichen Materialien entsteht dann eine Spannung durch einen sogenannten thermoelektrischen Effekt. Der Seebeck-Effekt ist das Gegenteil des Peltier-Effektes, in dem ein Stromfluß eine Temperaturdifferenz in einer Verbindung von unterschiedlichen Metallen bewirkt. Wenn man den Seebeck-Effekt nun bei einem Steueraufsatz für einen Wärmetauscher verwendet, dann nutzt man auf einfache Weise den bei jedem Wärmetauscher vorhandenen Temperatursprung aus, der zwischen der Umgebungstemperatur und der Temperatur des Wärmetauschers oder eines den Wärmetauscher durchströmenden Wärmeträgermediums besteht. Da eine derartige Temperaturdifferenz bei einem Wärmetauscher - bis auf sehr wenige Ausnahmefälle - fast immer vorhanden ist, steht auch fast immer die notwendige elektrische Leistung zur Verfügung, mit der man die Verstelleinrichtung betätigen kann. Ein thermoelektrischer Generator benötigt nicht sehr viel Platz. Insbesondere kann er relativ flach bauen, so daß man die Außenabmessungen des Steueraufsatzes kleinhalten kann. Der elektrische Verbraucher kann hier ausgebildet sein als Verstelleinrichtung, mit der ein Wirkzusammenhang zwischen der Betätigungseinrichtung und dem Ventilelement veränderbar ist. Zusätzlich oder anstelle der Verstelleinrichtung kann der elektrische Verbraucher auch einfach als Elektronik ausgebildet sein, die bestimmte Steuerungsaufgaben erfüllt oder einfach Meßwerte ermittelt und sie an eine übergeordnete Steuereinrichtung weiter meldet. Wenn der Steueraufsatz zusammen mit einem Motorventil verwendet wird, dann kann der elektrische Verbraucher auch der Motor des Ventils sein, mit dessen Hilfe das Ventilelement verstellt wird. In vielen Fällen gibt es an einem Thermostataufsatz ein Display, das bestimmte Parameter anzeigt, beispielsweise die aktuelle Temperatur oder eine Soll-Temperatur. Dieses Display kann ebenfalls den elektrischen Verbraucher bilden.

Vorzugsweise ist der Generator auf einer Seite wärmeleitend mit einem Gehäuse verbunden, das von einem Wärmeträgerfluid durchströmbar ist, und weist an einer anderen Seite einen Kühlkörper auf. Mit Hilfe des Kühlkörpers kann man dafür sorgen, daß der thermoelektrische Generator auf einer Seite praktisch Raumtemperatur annimmt, auf der anderen Seite wird die Temperatur des Wärmeträgermediums erzeugt, so daß man mit Hilfe der Temperaturdifferenz zwischen dem Wärmeträgermedium und der Raumtemperatur die notwendige elektrische Energie erzeugen kann. Die Temperaturdifferenz zwischen dem Wärmeträgermedium und der Raumtemperatur ist in den meisten Fällen ausreichend, um die notwendige elektrische Energie zu erzeugen.

Der Generator ist wärmeleitend mit einem Ventilgehäuse verbunden. Das Ventilgehäuse ist bei einem Heizkörper- oder Kühldecken-Ventil ohnehin vorhanden. Es folgt der Temperatur des Wärmeträgermediums schnell und mit einer relativ geringen Differenz. Zusätzliche externe Bauelemente sind in diesem Fall praktisch nicht erforderlich.

Der Generator ist innerhalb des Aufsatzes angeordnet ist und eine Wärmeleitstrecke in den Aufsatz hineinfährt. In diesem Fall kann der Aufsatz mehr oder weniger unverändert im Hinblick auf seine äußere Abmessungen bleiben. Die Wärmeleitstrecke ist dabei thermisch isoliert, so daß im Grunde nur der Generator mit Wärme versorgt wird. Eine Abstrahlung von Wärme in das Gehäuse wird hingegen vermieden.

Auch ist von Vorteil, wenn der Generator wärmeleitend mit einem Leitungsabschnitt verbunden ist. Auch der Leitungsabschnitt nimmt in der Regel die Temperatur des Wärmeträgermediums an.

Hierbei ist bevorzugt, daß der Leitungsabschnitt mit einem aufgespannten Ring versehen ist, der mit dem Generator wärmeleitend in Verbindung steht. Durch die Spannung des Ringes, der beispielsweise schellenartig ausgebildet sein kann, ist ein ausreichender Wärmeübergang von dem Leitungsabschnitt auf die Wärmeleitstrecke zum thermoelektrischen Generator sichergestellt.

Vorzugsweise ist der Generator in einer Umhüllung angeordnet, die mindestens eine Öffnung zum Durchtritt von Raumluft aufweist. Wenn der Aufsatz bei einem Heizkörper verwendet wird, dann wirkt die Raumluft als Kühlluft, die die notwendige Temperaturdifferenz zur Temperatur des Wärmeträgermediums bewirkt.

Generator ist mit einem Spannungsverstärker verbunden. Wenn man den thermoelektrischen Generator aus Gründen des Bauraumes nur mit kleinen äußeren Abmessungen verwendet, dann liefert er eine entsprechend kleine Spannung, die in vielen Fällen an sich noch nicht ausreichen wird, um die Verstelleinrichtung zu betreiben. Andererseits liefert der thermoelektrische Generator eine ausreichende elektrische Leistung, so daß man durch eine entsprechende Verstärkung der Spannung erreichen kann, daß der Generator direkt die Verstelleinrichtung betätigen kann.

Hierbei ist besonders bevorzugt, daß der Spannungsverstärker als Gleichspannungs/Gleichspannungs-Verstärker ausgebildet ist. Ein derartiger Gleichspannungs/Gleichspannungs-Verstärker kann in an sich bekannter Weise durch elektronische Bauelemente gebildet sein, so daß man keinen Transformator benötigt, der wiederum entsprechend groß baut.

Die elektrische Energieversorgungseinrichtung weist zusätzlich eine photovoltaische Einrichtung auf. Eine photovoltaische Einrichtung wandelt Lichtenergie in elektrische Energie um. Eine bekannte Ausgestaltung einer derartigen photovoltaischen Einrichtung sind sogenannte Solarzellen. Bei einer photovoltaischen Einrichtung im allgemeinen ist man allerdings nicht auf Sonnenlicht als Energielieferant beschränkt. Die Kombination von einem thermoelektrischen Generator mit einer photovoltaischen Einrichtung nutzt in besonders vorteilhafter Weise die beim Heizen in der Regel vorliegenden Umweltbedingungen aus. Wenn im Sommer wenig Heizenergie benötigt wird und dementsprechend der thermoelektrische Generator nur geringere Temperaturdifferenzen zur Verfügung hat und dementsprechend wenig elektrische Energie liefert, dann ist in der Regel in ausreichendem Maße Licht vorhanden, so daß die Verstelleinrichtung über die photovoltaische Einrichtung betrieben werden kann. Im Winter ist die Lichtausbeute in der Regel geringer. Dafür ist die zum Betreiben des thermoelektrischen Generators vorhandene Temperaturdifferenz ausreichend, um auf thermischem Weg die elektrische Energie liefern zu können. Insbesondere in Verbindung mit einem Spannungsverstärker hat die photovoltaische Einrichtung einen besonderen Vorteil: Der Spannungsverstärker benötigt zum "Anlaufen" in der Regel eine gewisse Vorspannung. Diese kann nun durch die photovoltaische Einrichtung bereit gestellt werden und zwar auch dann, wenn nur wenig Licht zur Verfügung steht. Diese Spannung, die zum Starten des Spannungsverstärkers erforderlich ist, muß leistungsmäßig nämlich nicht übermäßig stark belastet werden können.

Bevorzugterweise weist die photovoltaische Einrichtung mindestens ein lichtempfindliches Element auf, das auf einer Außenseite der Umhüllung montiert ist, in der der Generator angeordnet ist. Man kombiniert also auch baugruppenmäßig den thermoelektrischen Generator mit dem lichtempfindlichen Element. Das lichtempfindliche Element liefert dann, wenn es einem Licht ausgesetzt wird, eine elektrische Energie.

Vorzugsweise bildet die photovoltaische Einrichtung eine Spannungsversorgungseinrichtung für den Spannungsverstärker. Insbesondere in Verbindung mit einem Spannungsverstärker hat die photovoltaische Einrichtung einen besonderen Vorteil: Der Spannungsverstärker benötigt zum "Anlaufen" in der Regel eine gewisse Vorspannung. Diese kann nun durch die photovoltaische Einrichtung bereit gestellt werden und zwar auch dann, wenn nur wenig Licht zur Verfügung steht. Diese Spannung, die zum Starten des Spannungsverstärkers erforderlich ist, muß leistungsmäßig nämlich nicht übermäßig stark belastet werden können.

Auch ist bevorzugt, daß das lichtempfindliche Element an der Stirnseite des Aufsatzes oder einer in die gleiche Richtung weisenden Fläche angeordnet ist. Wenn der Aufsatz als Drehgriff angeordnet ist, dann weist die Stirnseite immer in die gleiche Richtung, wird also durch eine Betätigung nicht einer anderen Orientierung ausgesetzt. Auch eine in die gleiche Richtung weisende andere Fläche kann zur Anordnung des lichtempfindlichen Elements verwendet werden.

Die Erfindung wird im folgenden anhand von bevorzugten Ausführungsbeispielen in Verbindung mit der Zeichnung beschrieben. Hierin zeigen:
- Fig. 1: eine erste Ausgestaltung eines Thermostatventil-Aufsatzes,
- Fig. 2: eine zweite Ausgestaltung eines Thermostatventil-Aufsatzes und
- Fig. 3: eine dritte Ausgestaltung eines Thermostatventil-Aufsatzes.

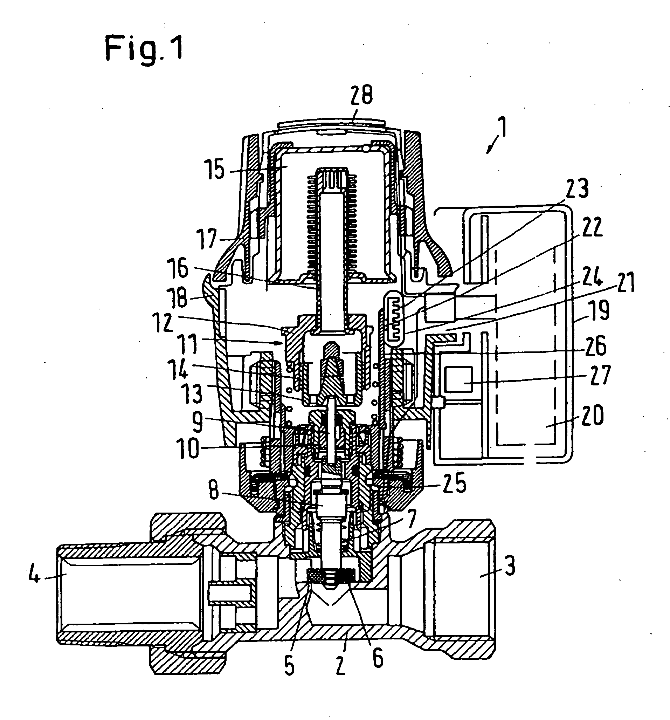

Fig. 1 zeigt einen Heizkörperventil-Thermostataufsatz 1, der an einem Ventilgehäuse 2 eines Heizkörperventils befestigt ist. Im Ventilgehäuse 2 ist in an sich bekannter Weise zwischen einem Zulauf 3 und einem Ablauf 4 ein Ventilsitz 5 angeordnet, mit dem ein Ventilelement 6 zusammenwirkt. Das Ventilelement 6 wird durch eine Öffnungsfeder 7 in Öffnungsrichtung vom Ventilsitz 5 weg bewegt. Ein Stößel 8 ist vorgesehen, um das Ventilelement 6 in Richtung auf den Ventilsitz 5 zu zu bewegen und dadurch zu einer Drosselung der Wärmeträgerflüssigkeit vom Zulauf 3 zum Ablauf 4 beizutragen.

Der Stößel 8 wird durch einen Betätigungsstift 9 beaufschlagt, der durch eine Stopfbuchse 10 geführt ist. Auf den Betätigungsstift 9 wirkt ein Zwischenglied 11. Das Zwischenglied 11 weist ein Oberteil 12 und ein Unterteil 13 auf, die über eine Gewindepaarung 14 in Eingriff stehen. Das Unterteil 13 ist hierbei drehfest gehalten, während das Oberteil 12 gegenüber dem Unterteil 13 verdreht werden kann. Durch eine Verdrehung des Oberteils gegenüber dem Unterteil 13 läßt sich eine Änderung der wirksamen Länge des Zwischenglieds 11 bewirken.

Auf das Zwischenglied 11 wirkt ein Thermostatelement 15, das in Abhängigkeit von einer Umgebungstemperatur einen Stößel 16 mehr oder weniger weit in Richtung auf den Ventilsitz 5 bewegt. In Abhängigkeit von der Länge des Zwischenglieds 11 führt dies bei gleicher Temperatur zu einer stärkeren oder weniger starken Drosselung. Über die Änderung der Länge des Zwischenglieds 11 läßt sich also ein Sollwert verstellen. Eine andere Möglichkeit zur Sollwertverstellung besteht darin, einen Handgriff 17 des Aufsatzes 1 gegenüber einem Basisteil 18 zu verdrehen.

Für die Änderung der wirksamen Länge des Zwischengliedes 11 ist eine Verstelleinrichtung 19 vorgesehen, die einen nur schematisch dargestellten Motor 20 aufweist, der über einen nicht näher dargestellten Eingriff auf das Oberteil 12 des Zwischengliedes 11 wirkt und dieses Oberteil 12 gegenüber dem Unterteil 13 verdrehen kann. Hierzu weist das Basisteil 18 eine Durchbrechung 21 auf, durch die der Motor in das Innere des Basisteils 18 eingreifen kann.

Der Motor 20 benötigt eine Zufuhr von elektrischer Energie. Zur Erzeugung von elektrischer Energie ist ein thermoelektrischer Generator 22 vorgesehen. Dieser thermoelektrische Generator 22 arbeitet nach dem sogenannten "Seebeck-Effekt", d.h. er erzeugt eine Spannung in einer Anordnung, die zwei unterschiedliche Materialien, beispielsweise zwei unterschiedliche Metalle oder zwei unterschiedliche Halbmaterialien aufweist, in dem die Übergänge zwischen diesen Materialien auf unterschiedlichen Temperaturen gehalten werden. Dieser Effekt wurde durch den deutschen Physiker Thomas Seebeck (1770-1831) entdeckt. Er wird auch "thermoelektrischer Effekt" genannt. Er findet seine Entsprechung in umgekehrter Richtung im Peltier-Effekt, in dem ein Stromfluß einen Temperaturunterschied zwischen den Übergängen von unterschiedlichen Metallen verursacht.

Der thermoelektrische Generator 22 ist nun auf einer Seite mit einem Kühlkörper 23 verbunden, der die Temperatur des thermoelektrischen Generators 22 auf dieser Seite mehr oder weniger an die Umgebungstemperatur angleicht. Um einen Austausch von Luft und damit mit der Umgebungstemperatur zu erreichen, weist das Basisteil 18 hier eine Öffnung 24 auf. Gegebenenfalls können auch mehrere einander gegenüberliegende Öffnungen 24 vorgesehen sein, um einen Luftstrom zuzulassen.

Das Basisteil 18 ist auf einer Trägereinrichtung 25 befestigt, die auf dem Ventilgehäuse 2 befestigt ist. Eine derartige Befestigung kann beispielsweise durch Verklemmen oder Verschrauben realisiert werden. Von der Trägereinrichtung geht ein Halter 26 aus einem wärmeleitfähigen Material, beispielsweise einem Metall, wie Kupfer, ab. Dieser Träger 26 trägt die andere Seite des Generators 22, so daß der Generator 22 der Differenz der Temperatur des Ventilgehäuses 2 und damit des durch das Ventilgehäuse 2 strömende Wärmeträgermediums einerseits und der Raumluft andererseits ausgesetzt ist. Diese Temperaturdifferenz kann durchaus eine Größenordnung von mehreren 10° annehmen, so daß mit Hilfe der Temperaturdifferenz eine elektrische Leistung in ausreichender Größe erzeugt werden kann. Gegebenenfalls kann man den Halter 26 im übrigen gegen das Innere des Basisteils 18 isolieren. Damit wird eine thermische Beeinflussung des Thermostatelements 15 verringert und ein Temperaturabfall zwischen dem Ventilgehäuse 2 und dem Generator 22 verringert. In vielen Fällen ist es auch günstig, eine thermische Isolierung zwischen den Halter 26 und dem Thermostatelement 15 vorzusehen, beispielsweise in Form einer nicht näher dargestellten Abschirmung.

Da der Generator 22 aber nur eine relativ kleine Grundfläche besitzen soll, um seine Abmessungen nicht zu sehr zu vergrößern, besteht die Gefahr, daß die vom Generator 22 erzeugte Spannung zu gering ist. Aus diesem Grunde ist in der Verstelleinrichtung 19 ein Spannungsverstärker 27 angeordnet, der mit dem Generator 22 verbunden ist. Die hierzu notwendigen elektrischen Verbindungen sind aus Gründen der Übersicht nicht näher dargestellt. Der Spannungsverstärker 27 ist als Gleichspannungs/Gleichspannungs-Verstärker ausgebildet. Er hat einen Verstärkungsfaktor von beispielsweise 50, so daß man bei einer Spannung von 0,06 Volt, die der thermoelektrische Generator 22 erzeugt, auf eine Ausgangsspannung von etwa 3 Volt kommt. Diese 3 Volt reichen aus, um den Motor 20 zu betätigen. Eine Spannung von 3 Volt entspricht der Spannung von zwei kleinen Batterien des Typs AAA.

Zusätzlich ist an der Stirnseite des Aufsatzes ein lichtempfindliches Element 28 einer photovoltaischen Einrichtung angeordnet. Das lichtempfindliche Element 28 erzeugt eine elektrische Spannung dann, wenn es einer Lichtausstrahlung ausgesetzt ist. Das lichtempfindliche Element 28 kann dann als Spannungsquelle oder Spannungsversorgungseinrichtung für den Spannungsverstärker 27 verwendet werden, so daß der Spannungsverstärker 27 starten kann, wenn er für einen derartigen Start eine Hilfsspannung benötigt.

Die Kombination von thermoelektrischem Generator 22 und lichtempfindlichen Element 28 berücksichtigt in besonderem Maße die bei einer Heizung vorliegenden äußeren Bedingungen: Im Winter steht eine relativ große Temperaturdifferenz zwischen der Umgebungsluft und dem Wärmeträgermedium zur Verfügung, so daß der thermoelektrische Generator 22 die für den Betrieb der Verstelleinrichtung 19 notwendige elektrische Leistung liefern kann. Dafür kann man in Kauf nehmen, daß das lichtempfindliche Element 28 eine geringere elektrische Leistung liefern kann. Im Sommer hingegen ist zwar die Temperaturdifferenz zwischen dem Wärmeträgermedium und der Umgebungsluft geringer. Der thermoelektrische Generator 22 wird also nur weniger elektrische Leistung liefern. Dafür kann das lichtempfindliche Element 28 (natürlich kann man auch mehrere lichtempfindliche Elemente 28 verwenden) eine größere elektrische Leistung liefern.

In der Ausführungsform, die in Fig. 1 dargestellt ist, benötigt man also außerhalb des Aufsatzes 1 keinen zusätzlichen Bauraum. Die in den Aufsatz aufgenommenen Bauelemente, also der thermoelektrische Generator 22 mit dem Kühlkörper 23 und das lichtempfindliche Element 28 fügen sich mehr oder weniger nahtlos in einen vorhandenen Aufsatz ein.

In einer nicht näher dargestellten Abwandlung kann man den Generator 22 auch außen am Basisteil 18 oder direkt am Ventilgehäuse 2 anbringen.

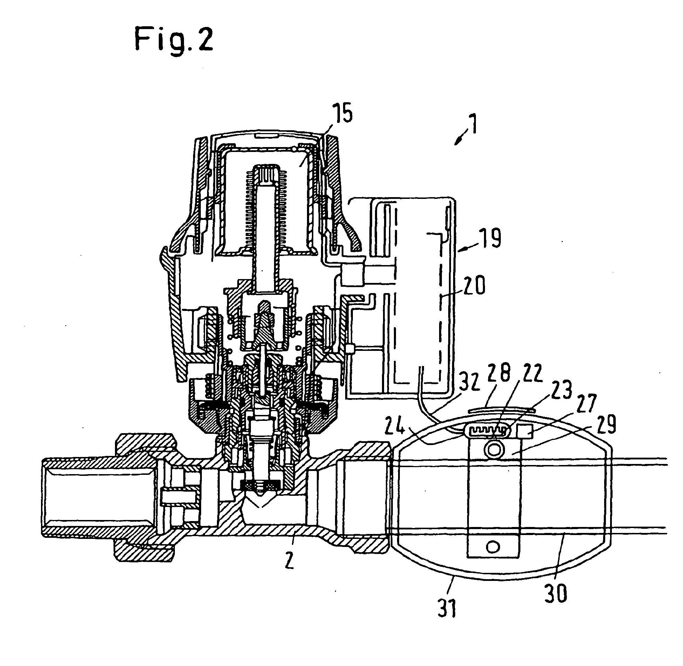

Wenn man ein externes Bauelement zulassen kann, dann kann man eine Ausgestaltung nach Fig. 2 verwenden. Hier sind gleiche und funktionsgleiche Teile mit den gleichen Bezugszeichen bezeichnet.

Der thermoelektrische Generator 22 ist nun nicht mehr innerhalb des Aufsatzes 1 angeordnet, sondern an einer Rohrschelle 29, die auf ein Anschlußrohr 30 gespannt ist, mit dem dem Ventilgehäuse 2 das Wärmeträgermedium zugeführt wird. Auch eine andere Befestigung, etwa Kleben oder Löten, ist möglich, solange ein ausreichender Wärmeübergang auf den Generator 22 sichergestellt ist. Dementsprechend weist das Anschlußrohr 30 praktisch die Temperatur des Wärmeträgermediums auf. Der Kühlkörper 23 befindet sich auf der der Rohrschelle 29 gegenüberliegenden Seite des Generators 22. Die lichtempfindlichen Elemente 28, die auch kurz als "Solarzellen" bezeichnet werden können, finden sich auf der Außenseite einer Umhüllung 31, mit der der thermoelektrische Generator geschützt ist. Die Umhüllung 31 weist wiederum die Öffnung 24 auf. Der thermoelektrische Generator 22 und das lichtempfindliche Element 28 liefern ihre Energie über eine elektrische Leitung 32 an die Verstelleinrichtung 19. Zweckmäßigerweise ist der Spannungsverstärker 27 hier in der Nähe des thermoelektrischen Generators 22 angeordnet.

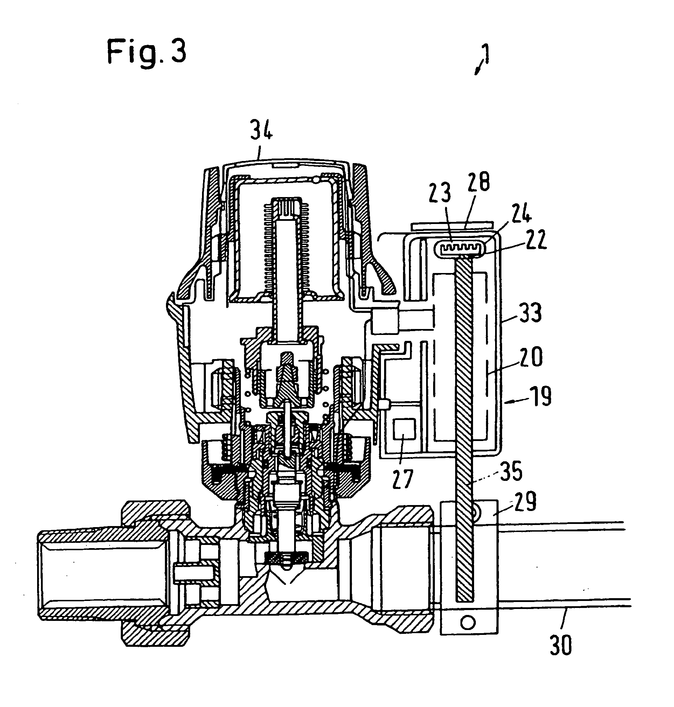

In Fig. 3 ist eine abgewandelte Ausführungsform dargestellt, bei der der Generator 22 im Innern eines Gehäuses 33 der Verstelleinrichtung 19 angeordnet ist. Die lichtempfindlichen Elemente 28 befinden sich auf einer Seite des Gehäuses 33, die parallel zur Stirnseite 34 des Aufsatzes 1 gerichtet ist. Der Wärmetransport zum Generator 22 wird über eine Wärmeleitstange 35 sichergestellt, die wiederum mit einer Schelle 29 an der Zuleitung 30 befestigt ist.

Auch das Gehäuse 33 weist eine Öffnung 24 auf, um den Kontakt zwischen dem Kühlkörper 23 und der Raumluft sicherzustellen.

## Patentansprüche

1. Wärmetauscherventil-Steueraufsatz, insbesondere Heizkörperventil-Thermostataufsatz, mit einer Betätigungseinrichtung, die mit einem in einem Ventilgehäuse (2) angeordneten Ventilelement (6) zusammenwirkt, einem elektrischen Verbraucher und einer elektrischen Energieversorgungseinrichtung, welche einen thermoelektrischen Generator aufweist, der mit einem Spannungsverstärker verbunden ist, wobei die elektrische Energieversorgungseinrichtung zusätzlich eine photovoltaische Einrichtung (28) aufweist, **dadurch gekennzeichnet, dass** der thermoelektrische Generator (22) im Steueraufsatz (1) aufgenommen und von einem Träger (26) aus einem wärmeleitenden Material getragen ist, der von einer am Ventilgehäuse (2) befestigten Trägereinrichtung (25) ausgeht.

2. Aufsatz nach Anspruch 1, **dadurch gekennzeichnet, daß** der Generator (22) auf einer Seite wärmeleitend mit einem Gehäuse (2, 30) verbunden ist, das von einem Wärmeträgerfluid durchströmbar ist, und an einer anderen Seite einen Kühlkörper (23) aufweist.

3. Aufsatz nach Anspruch 2, **dadurch gekennzeichnet, daß** der Generator (22) wärmeleitend mit einem Leitungsabschnitt (30) verbunden ist.

4. Aufsatz nach Anspruch 3, **dadurch gekennzeichnet, daß** der Leitungsabschnitt (30) mit einem aufgespannten Ring (29) versehen ist, der mit dem Generator (22) wärmeleitend in Verbindung steht.

5. Aufsatz nach einem der Ansprüche 1 bis 4, **dadurch gekennzeichnet, daß** der Generator (22) in einer Umhüllung (18, 31, 33) angeordnet ist, die mindestens eine Öffnung (24) zum Durchtritt von Raumluft aufweist.

6. Aufsatz nach einem der Ansprüche 1 bis 5, **dadurch gekennzeichnet, daß** der Spannungsverstärker (27) als Gleichspannungs/Gleichspannungs-Verstärker ausgebildet ist.

7. Aufsatz nach einem der Ansprüche 1 bis 6, **dadurch gekennzeichnet, daß** die photovoltaische Einrichtung mindestens ein lichtempfindliches Element (28) aufweist, das auf einer Außenseite der Umhüllung (17, 18; 31; 33) montiert ist, in der der Generator (22) angeordnet ist.

8. Aufsatz nach einem der Ansprüche 1 bis 7, **dadurch gekennzeichnet, daß** die photovoltaische Einrichtung eine Spannungsversorgungseinrichtung für den Spannungsverstärker (27) bildet.

9. Aufsatz nach Anspruch 7, **dadurch gekennzeichnet, daß** das lichtempfindliche Element (28) an der Stirnseite des Aufsatzes oder einer in die gleiche Richtung weisenden Fläche angeordnet ist.

## Claims

1. Heat exchanger valve control top part, particularly a radiator valve thermostat top part, with an actuation device interacting with a valve element (6) arranged in a valve housing (2), an electrical consumer and an electrical energy supply device that comprises a thermo-electric generator, which is connected to a voltage amplifier, the electrical energy supply device further comprising a photovoltaic device (28), **characterised in that** the thermo-electric generator (22) is accommodated in the control top part (1) and is carried by a carrier (26), which is made of a heat-conducting material and extends from a carrier device (25) fixed to the valve housing (2).

2. Top part according to claim 1, **characterised in that** on one side the generator (22) is connected in a heat conductive manner to a housing (2, 30), through which a heat carrying fluid can flow, and has on the other side a cooling member (23).

3. Top part according to claim 2, **characterised in that** the generator (22) is connected to a pipe section (30) in a heat conducting manner.

4. Top part according to claim 3, **characterised in that** the pipe section (30) is provided with a tightened ring (29), which is connected in a heat conducting manner to the generator (22).

5. Top part according to one of the claims 1 to 4, **characterised in that** the generator (22) is arranged in an enclosure (18, 31, 33), which has at least one opening (24) for the passing of room air.

6. Top part according to one of the claims 1 to 5, **characterised in that** the voltage amplifier (27) is a d.c./d.c. amplifier.

7. Top part according to one of the claims 1 to 6, **characterised in that** the photovoltaic device has at least one light-sensitive element (28), which is mounted on an outside of the enclosure (17, 18; 31; 33) in which the generator (22) is located.

8. Top part according to one of the claims 1 to 7, **characterised in that** the photovoltaic device forms a voltage supply device for the voltage amplifier (27).

9. Top part according to claim 7, **characterised in that** the light-sensitive element (28) is located on the front side of the top part or on a surface pointing in the same direction.

## Revendications

1. Thermostat, en particulier tête de robinet thermostatique pour radiateur, doté d'un dispositif d'actionnement, qui coopère avec un élément de soupape (6) dans un carter de robinet (2), d'un consommateur électrique et d'un dispositif d'alimentation en énergie électrique qui comprend un générateur thermoélectrique qui est relié à un amplificateur de tension, le dispositif d'alimentation en énergie électrique comprenant en outre un dispositif photovoltaïque (28), **caractérisé en ce que** le générateur thermoélectrique (22) est logé dans le robinet thermostatique (1) et est supporté par un support (26) fait en matériau thermiquement conducteur et qui s'étend depuis un dispositif de support (25) fixé au carter de robinet (2).

2. Tête selon la revendication 1, **caractérisée en ce que** le générateur (22) est relié d'un côté de manière thermoconductrice à un boîtier (2, 30), qui peut être traversé par un fluide caloporteur, et présente de l'autre côté un corps de refroidissement (23).

3. Tête selon la revendication 2, **caractérisée en ce que** le générateur (22) est relié à une section de conduite (30) de manière thermoconductrice.

4. Tête selon la revendication 3, **caractérisée en ce que** la section de conduite (30) est dotée d'une bague (29) serrée qui est en communication thermoconductrice avec le générateur (22).

5. Tête selon l'une quelconque des revendications 1 à 4, **caractérisée en ce que** le générateur (22) est agencé dans une enveloppe (18, 31, 33), qui présente au moins une ouverture (24) pour le passage de l'air ambiant.

6. Tête selon l'une quelconque des revendications 1 à 5, **caractérisée en ce que** l'amplificateur de tension (27) est réalisé sous forme d'amplificateur tension continue / tension continue.

7. Tête selon l'une quelconque des revendications 1 à 6, **caractérisée en ce que** le dispositif photovoltaïque présente au moins un élément photosensible (28), qui est monté sur un côté extérieur de l'enveloppe (17, 18 ; 31 ; 33), sur lequel est agencé le générateur (22).

8. Tête selon l'une quelconque des revendications 1 à 7, **caractérisée en ce que** le dispositif photovoltaïque forme un dispositif d'alimentation en tension pour l'amplificateur de tension (27).

9. Tête selon la revendication 7, **caractérisée en ce que** l'élément photosensible (28) est agencé sur la face avant de la tête ou sur une surface dirigée dans la même direction.
